# FASCICULE DE BREVET EUROPEEN

(11) **EP 1 136 326 B1**
(45) Date de publication et mention de la délivrance du brevet: **12.01.2005**
(21) Numéro de dépôt: 01400556.5
(22) Date de dépôt: 02.03.2001
(51) Int. Cl.: B60R 19/20, B61F 19/06

(54) **Dispositif de protection d'un véhicule contre le choc**
Aufprallschutzeinrichtung für ein Fahrzeug
Impact protection device for a vehicle

(30) Priorité: 23.03.2000 FR 0003730
(43) Date de publication de la demande: 26.09.2001
(73) Titulaire: ALSTOM, 92300 Levallois-Perret (FR)
(72) Inventeur: Demarquilly, Francis, 17140 Lagord (FR); Laporte, Jean-Jacques, 17000 La Rochelle (FR)
(74) Mandataire: de Lambilly Delorme, Marie Pierre

(56) Documents cités:
- EP-A- 0 816 178
- WO-A-98/50254
- DE-A- 2 023 068
- DE-A- 19 624 328
- FR-A- 2 420 456
- FR-A- 2 764 854
- GB-A- 1 376 860
- US-A- 5 431 463

## Description

L'invention se rapporte à un dispositif pour la protection d'un véhicule contre le choc et plus particulièrement à un dispositif comportant un élément gonflable présentant, une fois gonflé, une forme générale épousant la forme générale de la zone du véhicule à protéger. Le dispositif de protection de l'invention s'applique de préférence au domaine ferroviaire, notamment aux tramways et analogues, pour lesquels l'élément gonflable de protection est particulièrement volumineux.

Le document FR 2 420 456 divulgue l'utilisation d'un coussin gonflable de protection à l'avant d'un véhicule ferroviaire pour amortir le choc lors d'un impact avec un être humain ou tout autre obstacle. Toutefois, un tel coussin gonflable de grand volume présente l'inconvénient, lorsque la direction du choc n'est pas perpendiculaire au plan tangentiel de l'élément gonflable, de se déformer de façon non maîtrisée et peut glisser latéralement par rapport à la face avant du véhicule, jusqu'à éventuellement s'effacer de la zone d'impact sans assurer sa fonction d'amortissement.

Il est connu, du document FR 2 764 854, de remédier à cet inconvénient en utilisant un dispositif de protection comportant plusieurs éléments gonflables, disposés les uns à côtés des autres, et présentant une forme générale leur permettant de s'imbriquer latéralement avec les deux éléments gonflables adjacents. Les éléments gonflés non soumis directement au choc bloquent alors la déformation du ou des éléments gonflés soumis directement au choc et empêche l'effacement des éléments gonflables. Toutefois, un tel dispositif présente l'inconvénient d'être complexe à mettre en oeuvre.

Le but de la présente invention est donc de proposer un dispositif de protection d'un véhicule contre le choc comportant un élément gonflable qui possède une bonne stabilité latérale au choc, de manière à éviter tout effacement latéral de l'élément gonflable lorsque la direction du choc n'est pas perpendiculaire au plan tangentiel de l'élément gonflable, et qui soit simple et économique à réaliser.

L'invention a pour objet un dispositif de protection contre les chocs comportant un élément gonflable présentant, une fois gonflé, une surface d'appui au contact de la zone du véhicule à protéger et une surface d'impact destinée à recevoir directement le choc.

Selon l'invention, le dispositif de protection est caractérisé en ce que l'élément gonflable comporte des éléments de liaison reliant ponctuellement des points de maintien de la surface d'impact avec des points d'attache de la surface d'appui et les points d'attache sont disposés sur la surface d'appui de manière à ce que les éléments de liaisons soient inclinés par rapport à la normale à la surface d'appui.

Selon une autre caractéristique de l'invention, différents points d'attache, espacés sur la surface d'appui, sont reliés par des éléments de liaison à un même point de maintien, ou à plusieurs points de maintien proches les uns des autres.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
- La figure 1 est une vue de dessus, schématique, d'un véhicule ferroviaire équipé d'un dispositif de protection selon l'invention, lorsque l'élément gonflable est en position déployée, peu de temps avant le choc ;
- La figure 2 est une vue similaire à la figure 1, au moment du choc oblique avec un véhicule ;
- La figure 3 est une vue similaire à la figure 2 quelques instants après.

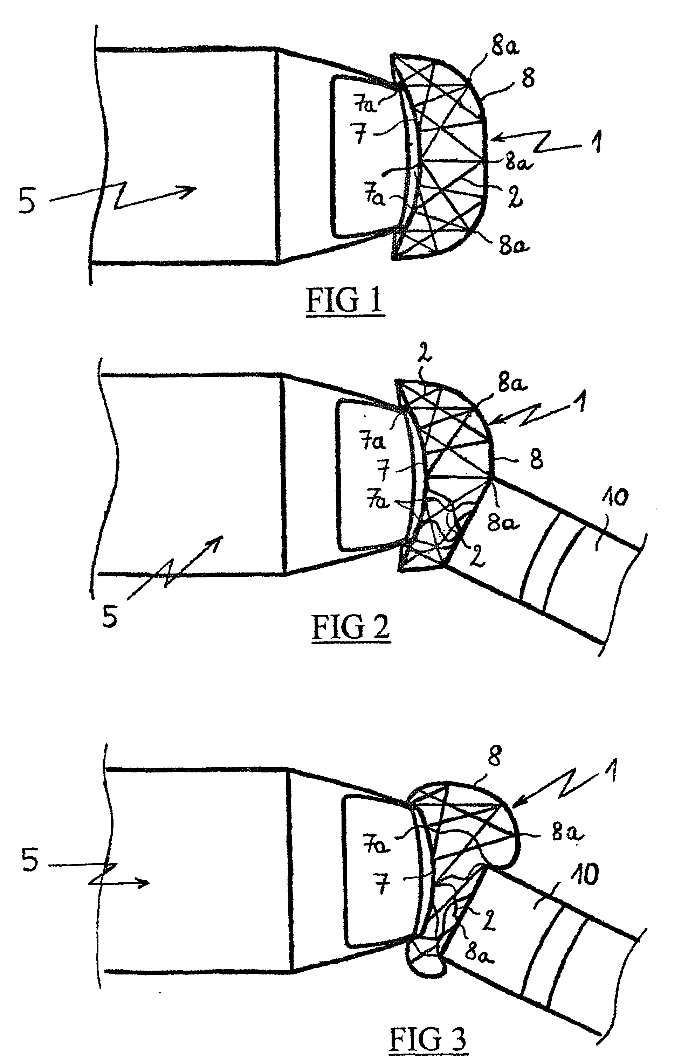

Pour faciliter la lecture du dessin, seuls les éléments nécessaires à la compréhension de l'invention ont été représentés. Par ailleurs, l'enveloppe de l'élément gonflable du dispositif de protection est représentée transparente sur les figures 1 à 3, afin de permettre la visualisation des éléments contenus dans l'élément gonflable et faciliter la compréhension de l'invention.

La figure 1 représente un véhicule ferroviaire 5, de type tramway, équipé d'un dispositif de protection contre les chocs constitué d'un élément gonflable 1 de grand volume comportant une enveloppe en tissu qui, une fois déployée, vient épouser la forme de la face avant du véhicule à protéger.

Conformément à la figure 1, l'élément gonflable 1 présente une surface d'appui 7 restant au contact de la face avant du tramway 5 et une surface d'impact 8 orientée vers l'avant du véhicule.

L'élément gonflable 1 renferme des fils 2 en tissu non extensible, reliant ponctuellement des points de maintien 8a de la surface d'impact 8 avec des points d'attache 7a de la surface d'appui 7, les fils 2 étant rattachés aux points7a et 8a par un moyen de fixation assurant une bonne résistance aux efforts de traction tel que des points de couture ou de la colle.

Chaque point de maintien 8a est relié par un fil 2 à au moins un point d'attache 7a, ce dernier étant choisi sur la surface d'appui 7 de manière à ce que le fil 2 s'étendent obliquement par rapport à la normale à la surface d'appui 7. Avantageusement, les points de maintien 8a seront reliés à deux ou trois points d'attache 7a disposés sur la surface d'appui 7 de manière à ce que les fils 2 s'étendent obliquement dans des directions complémentaires, assurant la stabilisation latérale et verticale du point de maintien 8a.

De manière préférentielle, la surface d'appui 7 de l'élément gonflable 1 est maintenue sur la face avant du tramway 5, par des sangles d'accrochage, non représentées, disposées de préférence au niveau des extrémités latérales de la face avant du tramway 5.

Le fonctionnement du dispositif de protection va maintenant être décrit :

Sous des conditions de service normal, l'élément gonflable 1 se trouve à l'état plié dans la partie avant du tramway 5 à l'intérieur d'un compartiment prévu à cet effet.

Lorsque qu'un risque de collision est détecté, soit de manière automatique, soit par la suite de l'intervention d'un mécanicien, du gaz comprimé est injecté dans l'élément gonflable 1, qui sous la pression, se déploie instantanément devant la face avant du tramway 5. Le dispositif de protection est alors prêt à amortir le choc avec tout objet, l'enveloppe en tissu de l'élément gonflable 1 possédant une porosité, ou des ouvertures calibrées, permettant l'expulsion progressive de l'air lors du choc.

Conformément à la figure 2, lorsqu'un véhicule 10 vient heurter l'élément gonflable 1 par le travers du tramway 5, l'élément gonflable 1 se déforme localement au niveau de sa surface d'impact 8. Le déplacement de la surface d'impact 8 s'accompagne du fléchissement des fils 2 orientés de telle sorte qu'ils sont soumis à des efforts de compression et du raidissement des fils 2 soumis à des efforts de traction. Le raidissement de ces fils 2 autorise alors le déplacement de la surface d'impact 8 dans l'axe du tramway 5 par leurs pivotements autour de leur point d'attache 7a, mais limite latéralement et verticalement le déplacement de la surface d'impact 8, empêchant ainsi l'effacement de l'élément gonflable 1.

Conformément à la figure 3, lorsque le véhicule 10 poursuit sa progression, l'élément gonflable 1 est comprimé de manière supplémentaire mais reste stabilisé dans la zone d'impact du véhicule ce qui permet d'assurer l'amortissement du choc.

Bien entendu, l'invention n'est nullement limitée au mode de réalisation décrit et illustré qui n'a été donné qu'à titre d'exemple.

Ainsi, dans l'exemple représenté, les fils de liaison sont disposés à l'intérieur de l'enveloppe de l'élément gonflable. Toutefois, dans une variante de réalisation de l'invention non représentée, les fils de liaison pourront être disposés à l'extérieur de l'enveloppe de l'élément gonflable, par exemple en cheminant le long de la surface de l'élément gonflable. Une telle variante de réalisation peut être réalisée en utilisant un filet à grandes mailles dans lequel l'élément gonflable se déploie.

Ainsi, les fils de liaison pourront être remplacés par des sangles ou tout autre moyen équivalent.

## Revendications

1. Dispositif de protection d'un véhicule (5) contre le choc comportant un élément gonflable (1) présentant, une fois gonflé, une surface d'appui (7) au contact de la zone du véhicule à protéger et une surface d'impact (8) destinée à recevoir directement le choc, **caractérisé en ce que** ledit élément gonflable (1) comporte des éléments de liaison (2) reliant ponctuellement des points de maintien (8a) de la surface d'impact (8) avec des points d'attache (7a) de la surface d'appui (7), lesdits points d'attache (7a) étant disposés sur la surface d'appui (7) de manière à ce que les éléments de liaisons (2) soient inclinés par rapport à la normale à la surface d'appui (7).

2. Dispositif de protection d'un véhicule selon la revendication 1, caractérisé en ce différents points d'attache (7a), espacés sur la surface d'appui (7), sont reliés par des éléments de liaison (2) à un même point de maintien (8a), ou à plusieurs points de maintien (8a) proches les uns des autres.

3. Dispositif de protection selon l'une quelconque des revendications 1 à 2, **caractérisé en ce que** lesdits éléments de liaison (2) sont inextensibles.

4. Dispositif de protection selon la revendication précédente, **caractérisé en ce que** lesdits éléments de liaison (2) sont des fils.

5. Dispositif de protection selon la revendication 3, **caractérisé en ce que** lesdits éléments de liaison (2) sont des sangles.

6. Dispositif de protection selon l'une quelconque des revendications 1 à 5, **caractérisé en ce que** lesdits éléments de liaison sont disposés à l'intérieur de l'élément gonflable (1).

7. Dispositif de protection selon l'une quelconque des revendications 1 à 5, **caractérisé en ce que** lesdits éléments de liaison sont disposés à l'extérieur de l'élément gonflable (1).

## Patentansprüche

1. Vorrichtung zum Schutz eines Fahrzeugs (5) gegen Aufprall, welche ein aufblasbares Element (1) aufweist, das, wenn es aufgeblasen ist, eine Auflagefläche (7), welche in Kontakt mit dem zu schützenden Bereich des Fahrzeugs ist, und eine Stoßfläche (8), die dazu bestimmt ist, direkt den Aufprall aufzunehmen, aufweist, **dadurch gekennzeichnet, dass** das aufblasbare Element (1) Verbindungselemente (2) aufweist, welche punktuell Haltepunkte (8a) der Stoßfläche (8) mit Befestigungspunkten (7a) der Auflagefläche (7) verbinden, wobei die Befestigungspunkte (7a) derart an der Auflagefläche (7) angeordnet sind, dass die Verbindungselemente (2) im Verhältnis zur Normalen an der Auflagefläche (7) geneigt sind.

2. Vorrichtung zum Schutz eines Fahrzeugs gemäß Anspruch 1, **dadurch gekennzeichnet, dass** unterschiedliche Befestigungspunkte (7a), welche auf der Auflagefläche (7) mit Zwischenräumen angeordnet sind, durch die Verbindungselemente (2) mit einem gleichen Haltepunkt (8a) oder mit mehreren Haltepunkten (8a), die nah beieinander sind, verbunden sind.

3. Vorrichtung zum Schutz gemäß irgend einem der Ansprüche 1 bis 2, **dadurch gekennzeichnet, dass** die Verbindungselemente (2) nicht dehnbar sind.

4. Vorrichtung zum Schutz gemäß dem vorausgegangenen Anspruch, **dadurch gekennzeichnet, dass** die Verbindungselemente (2) Leinen sind.

5. Vorrichtung zum Schutz gemäß Anspruch 3, **dadurch gekennzeichnet, dass** die Verbindungselemente (2) Gurte sind.

6. Vorrichtung zum Schutz gemäß irgend einem der Ansprüche 1 bis 5, **dadurch gekennzeichnet, dass** die Verbindungselemente im Inneren des aufblasbaren Elements (1) angeordnet sind.

7. Vorrichtung zum Schutz gemäß irgend einem der Ansprüche 1 bis 5, **dadurch gekennzeichnet, dass** die Verbindungselemente außerhalb des aufblasbaren Elements (1) angeordnet sind.

## Claims

1. A device for protecting a vehicle (5) against impact, the device comprising an inflatable element (1) presenting, once inflated, a bearing surface (7) in contact with the region of the vehicle to be protected, and an impact surface (8) designed to receive the impact directly, the device being **characterized in that** said inflatable element (1) includes localized connection elements (2) connecting holding points (8a) of the impact surface (8) with fastening points (7a) of the bearing surface (7), said fastening points (7a) are disposed on the bearing surface (7) in such a manner that the connection elements (2) slope relative to the normal at the bearing surface (7).

2. A vehicle protection device according to claim 1, **characterized in that** a plurality of fastening points (7a), spaced apart over the bearing surface (7), are connected by connection elements (2) to the same holding point (8a), or to a plurality of holding points (8a) that are close to one another.

3. A protection device according to claim 1 or 2, **characterized in that** said connection elements (2) are non-stretch.

4. A protection device according to the preceding claim, **characterized in that** said connection elements (2) are lines.

5. A protection device according to claim 3, **characterized in that** said connection elements (2) are straps.

6. A protection device according to any one of claims 1 to 5, **characterized in that** said connection elements are disposed inside the inflatable element (1).

7. A protection device according to any one of claims 1 to 5, **characterized in that** said connection elements are disposed outside the inflatable element (1).
